(19) Europäisches Patentamt
European Patent Office
Office européen des brevets

(11) Publication number: **0 276 517 B1**

(12) **EUROPEAN PATENT SPECIFICATION**

(45) Date of publication of patent specification: **02.05.91** (51) Int. Cl.5: **A23D 7/02**

(21) Application number: **87202630.7**

(22) Date of filing: **18.12.87**

Consolidated with 88900886.8/0329712
(European application No./publication No.) by
decision dated 06.04.90.

# (54) A process for producing a butter-like w/o emulsion spread.

(30) Priority: **22.12.86 GB 8630555**

(43) Date of publication of application:
**03.08.88 Bulletin 88/31**

(45) Publication of the grant of the patent:
**02.05.91 Bulletin 91/18**

(84) Designated Contracting States:
**AT BE CH DE ES FR GB GR IT LI NL SE**

(56) References cited:
**EP-A- 0 101 104**
**LU-A- 60 482**
**US-A- 2 605 185**

(73) Proprietor: **UNILEVER NV**
**Burgemeester s'Jacobplein 1 P.O. Box 760**
**NL-3000 DK Rotterdam(NL)**

(72) Inventor: **Moran,David Patrick Joseph**
**Jubilee Lodge, Kyston Road**
**Covington,Hunts(GB)**

(74) Representative: **Dries, Antonius Johannes Maria**
**Unilever N.V. Patent Division P.O. Box 137**
**NL-3130 AC Vlaardingen(NL)**

**EP 0 276 517 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a process for producing a butter-like w/o emulsion spread, particularly a spread with a reduced or low fat content.

More particularly, the present invention relates to a process for producing a butter-like w/o emulsion spread containing a fat with a relatively high level of fat solids, part of said fat being present in granular form.

In the context of the present invention we mean by butter-like spreads : plastic, cool melting products giving an oral response, particularly a palate breakdown which closely approaches that of dairy butter. By a fat with a high level of fat solids we mean fats which at refrigerator temperatures (5-10 °C) have a level of crystallized fat higher than 25% and preferably from 40-85%.

By reduced fat spreads we mean spreads containing less than 70% fat and preferably containing 55-65% fat, whereas by low fat spreads we generally mean spreads containing 20-55%, preferably 30-50% fat.

A major problem with reduced fat spreads using conventional fat blends is that the palate melting behaviour is clearly different than that of higher fat products such as butter. The most obvious reason for this is the reduced amount of solid fat in the product. An advantage of the fats used in this invention is that the amount of solid fat they confer in the reduced fat spread approaches that to be found in conventional high fat products.

According to the present invention there is provided : A process for producing a butter-like w/o emulsion spread containing less that 70% wt fat, starting from a thickenable or gellable aqueous phase and a fatty phase, characterized in that :

a) an oil-in-water emulsion cream is produced from an aqueous phase and a high solids fat containing at least 25% crystallized fat at a temperature within the range of 5-10 °C, and said oil-in-water emulsion is cooled to a temperature at which at least part of the high solids fat is crystallized;

b) separately from step (a) a water-in-oil emulsion is produced from an aqueous phase and the remainder of the fat of the fatty phase, and said water-in-oil emulsion is cooled to a temperature at which at least part of the remainder of the fat is crystallized; and

c) the at least partially crystallized emulsions obtained by step (a) and step (b) are combined, mixed, cooled further and worked to achieve further crystallization of the fatty phase and obtain a water-in-oil emulsion spread containing fat globules of an average size not exceeding 20 micrometers and preferably ranging from 3-6 micrometers.

The high solids fat is preferably concentrated in the o/w emulsion cream.

In order to stabilize the w/o emulsion spreads against exudation of water, their aqueous phase is thickened or gelled with a thickening or gelling agent which can be incorporated in either the o/w emulsion or in the w/o emulsion or in both the o/w and the w/o starting emulsions.

Such gelling and thickening agents may include any of the substances well known in the art. However, those are preferred which are setting slowly or whose setting can be delayed by controlling the temperature and the shear conditions during processing. Preferred thickening/gelling agents are gelatin, i-carrageenan calcium alginate, milk proteins or mixtures thereof.

The aqueous phase of the spreads preferably contains 1-15 wt.% milk protein such as sodium caseinate and 1-5 wt.% gelatin, based on the aqueous phase.

Setting of the aqueous phase is preferably delayed until at least 5% and preferably 20-80% of the crystallizable fat has crystallized.

In a preferred embodiment of the process according to the invention both the w/o and the o/w emulsions are cooled independently in a Votator® A unit operating at 500-1500 r.p m., the super-cooled emulsions are subsequently brought together in a Votator® C unit operating at 1500-3000 r.p.m. whereby crystallization of the fat takes place and setting the aqueous phase is initiated. Optionally the emulsion can be further processed through a second Votator® C unit operating at 500-1500 r.p.m., in which crystallization and setting are completed.

The o/w emulsion can be mixed in variable amounts, in line with the w/o emulsion. Generally, the ratio of o/w emulsion to w/o emulsion will vary from 1:5 to 1:1 preferably from 1:5 to 2.5:5.

The fat in the fatty phase preferably contains suitable quick crystallizing, sharp melting fats, i.e. fats which contribute to avoidance of waxiness on consumption of the spreads because, at body temperature, they do not contain any crystallized fat.

Suitable quick-crystallizing fats include hydrogenated lauric fats such as palmkernel oil, coconut oil, babassu oil, murumuru oil, ouricuri oil, which are rich in $C_{12}$-$C_{14}$ fatty acids, further tallow fat or fractions thereof, butterfat or fractions thereof or mixtures of said fat. Preferably, the quick-crystallizing fat constitutes at least 10% wt. and preferably 20-80% wt. based on the total fat.

Formation of fat globules and fat granules is promoted by the presence in the fatty phase of a high solids fat displaying the following fat solids profile expressed in percentages determined by nuclear magnetic resonance (NMR) at the indicated temperatures:

$N_5$ = 40-90 $N_{30}$ = 0.1-15
$N_{10}$ = 25-85 $N_{35}$ = 0-5
$N_{20}$ = 15-35

Appropriate fats (i) to be incorporated in the fatty phase comprise wet- and dry-fractionated fractions of palm oil, characterized by the following triglyceride composition:

SSS triglycerides : 1-9 wt.%;
SOS triglycerides : 30-75 wt.%;
SSO triglycerides : 3-12 wt.%,

the remainder of fat (i) up to 100 wt.% consisting of SOO and SLS triglycerides, wherein "S" = saturated fatty acids, "O" = mono-unsaturated fatty acids and "L" = polyunsaturated fatty acids.

Suitable is a wet-fractionated palm mid-fraction, characterized by the following triglyceride composition:

SSS = 1-5 wt.%;
SOS = 50-75 wt.%;
SSO = 3-9 wt.%,

the remainder of the triglycerides of fat (i) up to 100 wt.% consisting of SOO and SLS triglycerides, or dry fractionated palm mid-fraction, characterized by the following triglyceride composition :

SSS = 1-9 wt.%;
SOS = 30-50 wt.%
SSO = 5-12 wt.%,

the remainder of the triglycerides of fat (i) up to 100 wt.% consisting of SOO and SLS triglycerides.

The preparation of wet and dry fractionated palm mid-fractions is well known in the art (see for instance US 4 203 095, US 3 012 891, GB 827 172, GB 1 431 781 and GB 1 390 936.

In a preferred embodiment of the process according to the invention, the high solids fat, particularly the quick crystallizing, sharp melting fats, are concentrated in the starting o/w emulsion cream. In general the fat phase will comprise 10-80 wt.% of high solids fat and 90-20 wt.% of other oils and fats of a triglyceride composition such that the total fat blend has the following fat solids profile :

$N_{10}$ = 20-70
$N_{20}$ = 10-40
$N_{30}$ = 0.1-5
$N_{35}$ = 0-5

The process according to the invention as outlined above leads to spreads spreadable at refrigerator temperatures which have good plasticity and organoleptic properties reminiscent of dairy butter.

It is believed that this is due both to the formulation criteria and to the processing criteria outlined above. It is also believed that concentration of high solids fats, particularly the quick crystallizing, sharp melting fat, in the cream promotes the formation and transfer of granulated fat to the continuous fat phase.

The presence of granules is believed to soften resultant products with respect to those produced by conventional type processing and enhance the plastic character of the products, while maintaining the high solids properties if the overall fat blend, resulting in a product with a cool and quick melting character. Hence higher fat solids in the products than conventionally employed with reduced fat spreads can be used, approaching or matching the figure normally found in the 80% fat products. Product melting characteristics are thus enhanced without the unwanted too high hardness values at spreading temperatures.

Distribution of the higher melting triglycerides of the structural fat (high solids fat) as small granules of

an average size not exceeding 20 micrometer, and more preferably not exceeding 10 micrometer, allow the cool melting properties of the fat blend to be appreciated while maintaining the hardness of the product within acceptable ranges, i.e. values not exceeding 5,000 $g/cm^2$ and preferably ranging from 1,000 to 4,000 $g/cm^2$.

The invention will be illustrated in the following Examples :

Example 1

A w/o pre-mix emulsion of the following composition was prepared by mixing the ingredients at 60° C.

| | wt.% |
|---|---|
| Fat blend | 15.0 |
| Sunflower oil | 24.2 |
| Lecithin | 0.4 |
| Monoglyceride | 0.4 |
| Potassium sorbate | 0.1 |
| Gelatin | 2.0 |
| Sodium chloride | 1.0 |
| Water q.s.p. | up to 100 wt.%. |

The fat blend consisted of a mixture of 60% soybean oil hydrogenated to a melting point of 38° C and 40% of a randomly interesterified mixture of 40% palm oil and 60% palmkernel oil.

An o/w emulsion of the following composition was prepared :

| | wt.% |
|---|---|
| Fully hydrogenated palmkernel fat | 40.0 |
| Skimmilk powder | 6.0 |
| Gelatin | 2.0 |
| Potassium sorbate | 0.1 |
| Sodium chloride | 1.0 |
| Water q.s.p. | Up to 100 wt.%. |

The cream was produced at 60° C using a minisonic homogenizer giving an average oil droplet size of about 6 micrometer.

The gelatin was added after homogenization of all other ingredients of the cream.

The cream was first fed into a Votator® A unit operating at 1,000 r.p.m., followed by a Votator® $C_1$ crystallizer unit operating at 1,000 r.p.m. Precrystallized cream containing at least 50 wt.% solid fat left the $C_1$ unit at 5° C and was mixed in line with the pre-crystallized w/o emulsion (containing about 7 wt.% fat solid), which was first fed into a Votator $A_2$ unit operating at 1,000 r.p.m. (outlet temperature 13° C) and subsequently fed into a Votator ® $C_2$ unit operating at 2,000 r.p.m. The mixture of the two emulsions in the Votator® $C_2$ unit was allowed to crystallize further and the aqueous phase to set. The temperature of the emulsion leaving the $C_2$ unit was about 17° C. This emulsion was further fed into a Votator® $C_3$ unit operating at 1,000 r.p.m. The temperature of the product leaving this unit was 10° C and was ready for packaging.

The average residence time in the A unit was 3 sec. and in the C units 3 min.

The proportion of cream to w/o emulsion was 1:2.

Example 2

A w/o (pre-mix) emulsion was produced following the procedure of Example 1. This pre-mix had the following composition:

| | wt. % |
|---|---|
| Fat blend (of Example 1) | 30 |
| Sunflower oil | 49.2 |
| Lecithin | 0.4 |
| Monoglyceride | 0.4 |
| Potassium sorbate | 0.1 |
| Gelatin | 0.7 |
| Sodium chloride | 1.0 |
| Water q.s.p. | up to 100 wt.% |

An o/w emulsion cream (pre-mix) was produced following the procedure of Example 1. This cream had the following composition :

| | wt.% |
|---|---|
| Fully hydrogenated pamkernel fat | 40.0 |
| Skimmilk powder | 6.0 |
| Gelatin | 2.0 |
| Potassium sorbate | 0.1 |
| Sodium chloride | 1.0 |
| Water q.s.p. | up to 100 wt.% |

The cream and the w/o emulsion were blended in line in the ratio 1:1.
The resulting spread had the following approximate composition :

| | wt. % |
|---|---|
| Fully hydrogenated palmkernel fat | 13.33 |
| Fat blend (as defined) | 10.00 |
| Sunflower oil | 16.13 |
| Lecithin | 0.27 |
| Monoglyceride | 0.27 |
| Sodium chloride | 1.0 |
| Potassium sorbate | 0.1 |
| Gelatin | 2.0 |
| Skimmilk powder | 2.0 |
| Water | about 54.9 |

The hardness (C value) of the product measured at 5° C was about 1,000 g/m².

The product was fairly plastic and had good spreadability at refrigerator temperature. On consumption, the product was perceived as cool.

Photomicrographs of the product were taken, using phase contrast at a magnification of 400. The water drops and granules appeared as bright and dark spots. The average size of the granules was approx. 5 micrometer.

The processing line can be illustrated as follows :

1000 rpm. 2000 rpm. 1000 rpm.
w/o —— $A_2$ —— $C_2$ —— $C_3$ —— pack.
13°C 17°C 10°C
1000 rpm. 1000 r.p.m.
o/w cream —— $A_1$ —— $C_{15}$
5°C

The resulting product had the following approximate composition :

| | Wt. % |
|---|---|
| Fully hydrogenated palmkernel fat | 20.0 |
| Fat blend (as defined in Example 1) | 15.0 |
| Sunflower oil | 24.6 |
| Lecithin | 0.2 |
| Monoglyceride | 0.2 |
| Skimmilk powder | 3.0 |
| Gelatin | 1.3 |
| Sodium chloride | 1.0 |

| | |
|---|---|
| Potassium sorbate | 0.1 |
| Water q.s.p. | up to 100 wt.% |

The line used was the same as employed in Example 1.

The average residence time in the A unit was 3 sec. and in the C units 3 min.

The level of crystallized fat in the pre-crystallized w/o emulsion was at least 5% based on fat, before the aqueous phase was allowed to set. The level of crystallized fat in the pre-crystallized o/w emulsion cream was at least 108 based on fat, before the aqueous phase was allowed to set.

The hardness (C value) of the product measured at 5°C was approx. 1700 g/cm$^2$. The product was fairly plastic and had good spreadability at refrigerator temperature. On consumption, the product was perceived as cool.

Photomicrographs of the product were taken, using phase contrast at a magnification of 400. The water drops and granules appeared as bright and dark spots. The average size of the granules was approx. 5 micrometer.

Example 3

A w/o (pre-mix) emulsion was produced, following the procedure of Example 1. This pre-mix had the following composition :

| | wt. % |
|---|---|
| Fat blend | 5.08 |
| Butter | 36.34 |
| Sunflower oil | 5.0 |
| Lecithin | 0.3 |
| Monoglyceride | 0.3 |
| Sorbate | 0.13 |
| Gelatin | 2.0 |
| Sodium chloride | 0.4 |
| Whey. powder ) | |
| Buttermilk powder) | 5.7 |
| Caseinate ) | |
| Water q.s.p. | to 100 |

and buffered to a pH of 6 with a mixture of lactic and citric acids.

An o/w emulsion cream (pre-mix) was produced, following the procedure of Example 1. This cream had the following composition :

| | wt.% |
|---|---|
| Fully hydrogenated palmkernel fat | 40 |
| Whey powder ) | |
| Buttermilk powder) | 5.7 |
| Caseinate ) | |
| Gelatin | 2.0 |
| Sorbate | 0.13 |
| Sodium chloride | 0.4 |
| Water q.s.p. | up to 100 |

and buffered to a pH of 6 with a mixture of lactic and citric acids.

The cream and the w/o emulsion were blended in line in the ratio 1:1. The processing line can be illustrated as follows :

1000 rpm 2000 rpm. 1000 rpm
5°C 5°C 10°C
w/o A C C pack.
1000 rpm. 1000 rpm
o/w cream A C
0°C

The product was fairly plastic and had good spreadability at refrigerator temperature. On consumption, the product was perceived as cool.

Comparative Example

Example 3 was repeated without the granulation process. In this Comparative Example the fat phase of the cream and that of the w/o emulsion were combined to obtain a single fat phase. This fat phase was combined with the aqueous phase ingredients to give a single w/o pre-mix. This pre-mix was processed by passage along a processing line illustrated as follows :

1000 rpm 1000 rpm 1000 rpm 1000 rpm 1000 rpm
w/o 10°C 10°C 10°C 10°C 10°C
pre-mix _____ C _____ A _____ C ____ A _____ C _____ pack.

The products obtained from Example 3 and the Comparative Example were compared. Although the products had similar C-values (hardness), the product of Example 3 was much more plastic on spreading. At 5°C, the product of Example 3 gave a collar value of 2, whereas the product of the Comparative Example gave a collar value of 5.

**Claims**

**1.** A process for producing a butter-like w/o emulsion spread containing less that 70%wt fat, starting from

a thickenable or gellable aqueous phase and a fatty phase, characterized in that :

a) an oil-in-water emulsion cream is produced from an aqueous phase and a high solids fat containing at least 25% crystallized fat at a temperature within the range of 5-10°C, and said oil-in-water emulsion is cooled to a temperature at which at least part of the high solids fat is crystallized;

b) separately from step (a) a water-in-oil emulsion is produced from an aqueous phase and the remainder of the fat of the fatty phase, and said water-in-oil emulsion is cooled to a temperature at which at least part of the remainder of the fat is crystallized; and

c) the at least partially crystallized emulsions obtained by step (a) and step (b) are combined, mixed, cooled further and worked to achieve further crystallization of the fatty phase and obtain a water-in-oil emulsion spread containing fat globules of an average size not exceeding 20 micrometers and preferably ranging from 3-6 micrometers.

**2.** A process according to Claim 1, wherein high solids fat is concentrated in the cream.

**3.** A process according to Claim 1, wherein the aqueous phase of at least one of the starting emulsions contains a thickening or gelling agent.

**4.** A process according to Claim 3, wherein setting of the aqueous phase is delayed until a stage where at least part of the fat has crystallized.

**5.** A process according to Claim 4, wherein gelling is delayed by using a slow setting gelling agent or by applying temperature and shear conditions preventing 35 setting of the gellable aqueous phase.

**6.** A process according to Claim 4, wherein the aqueous phase is thickened/gelled with gelatin, i-carrageenan, calcium alginate, milk protein or mixtures thereof.

**7.** A process according to Claim 4, wherein the aqueous phase of the spread contains 1-15 wt.% of milk protein, preferably sodium caseinate, and 1-5 wt.% gelatin based on the aqueous phase.

**8.** A process according to Claim 4, wherein setting of the aqueous phase is delayed until at least 5% and preferably 20-80% of the crystallizable fat has crystallized.

**9.** A process according to Claim 1, wherein pre-crystallization of the emulsion is carried out in a Votator® A unit operating at 500-1500 r.p.m. and mixing of the emulsion and complete crystallization are 20 carried out in Votator® C unit or in a sequence of 2 Votator® C units.

**10.** A process according to Claim 9, wherein mixing is first achieved in a first Votator® C unit operating at 1500-3000 r.p.m., whereafter further working is continued in a second Votator® C unit operating at 500-1500 r.p.m.

**11.** A process according to Claim 1, wherein the ratio o/w emulsion cream : w/o emulsion ranges from 1:5 to 1:1, preferably from 1:5 to 2.5:5.

**12.** A process according to Claim 1, wherein the high solids fat comprises quick-crystallizing, sharp-melting fats selected from hydrogenated lauric fats or fractions thereof, tallow or fractions thereof, non-hydrogenated lauric fats, butterfat or fractions thereof and mixtures of said fats, said quick-crystallizing, sharp-melting fats being preferably incorporated in the cream.

**13.** A process according to Claim 1, wherein the quick crystallizing fat constitutes at least 10 wt.% and preferably 20-80 wt.% based on the total fat.

**14.** A process according to Claim 1, wherein a fatty phase is used which contains a high solids fat displaying the following fat solids profile expressed in percentages determined by nuclear magnetic resonance (NMR) at the indicated temperatures:

$N_5$ = 40-90 $N_{30}$ = 0.1-15
$N_{10}$ = 25-85 $N_{35}$ = 0-5
$N_{20}$ = 15-35

15. A process according to Claim 1, wherein the fat phase comprises 10-80 wt.% of high solids fat and 90-20 wt.% of other oils and fats of a triglyceride composition such that the total fat blend has the following fat solids profile :

$N_{10}$ = 20-70 $N_{30}$ = 0.1-5
$N_{20}$ = 10-40 $N_{35}$ = 0-5

16. A process according to Claim 1, wherein the fatty phase comprises a fat (i) characterized by the following triglyceride composition :

SSS triglycerides : 1-9 wt.%;
SOS triglycerides : 30-75 wt.%;
SSO triglycerides : 3-12 wt.%,

the remainder of fat (i) up to 100 wt.% consisting of SOO and SLS triglycerides.

17. A process according to Claim 16, wherein fat (i) is a palm mid-fraction characterized by the following triglyceride composition :

SSS = 1-5 wt.%;
SOS = 50-75 wt.%;
SSO = 3-9 wt.%,

the remainder of the triglycerides of fat (i) up to 100 wt.% consisting of SOO and SLS triglycerides.

18. A process according to Claim 16, wherein fat (i) is a palm mid-fraction, characterized by the following triglyceride composition :

SSS = 1-9 wt.%;
SOS = 30-50 wt.%;
SSO = 5-12 wt.%,

the remainder of the triglycerides of fat (i) up to 100 wt.% consisting of SOO and SLS triglycerides.

## Revendications

1. Procédé de production d'une émulsion eau-dans-huile analogue au beurre qui contient moins de 70% en poids de graisse, en partant d'une phase aqueuse épaississable ou gélifiable et d'une phase grasse, caractérisé en ce que :
   (a) on produit une crème d'émulsion huile-dans-eau à partir d'une phase aqueuse et une graisse riche en solides contenant au moins 25% de graisse cristallisée à une température comprise entre 5 et 10 °C et on refroidit ladite émulsion huile-dans-eau à une température à laquelle une partie au moins de la graisse riche en solides est cristallisée ;
   b) séparément du stade (a), on produit une émulsion eau-dans-huile à partir d'une phase aqueuse et du complément de la graisse de la phase grasse et on refroidit ladite émulsion eau-dans-huile à une température à laquelle une partie au moins du restant de graisse est cristallisée ;
   (c) on combine les émulsions au moins partiellement cristallisées provenant du stade (a) et du stade (b), on mélange, on refroidit encore plus et on travaille pour obtenir un supplément de cristallisation de la phase grasse et obtenir une émulsion à tartiner eau-dans-huile contenant des globules de graisse d'une grosseur moyenne ne dépassant pas 20 $\mu$m et, de préférence, comprise entre 3 et 6 $\mu$m.

2. Procédé selon la revendication 1, dans lequel une graisse riche en solides est concentrée dans la crème.

3. Procédé selon la revendication 1, dans lequel la phase aqueuse d'au moins l'une des émulsions de départ contient un agent épaissisant ou gélifiant.

4. Procédé selon la revendication 3, dans lequel on retarde le durcissement de la phase aqueuse jusqu'à un stade auquel une partie au moins de la graisse est cristallisée.

5. Procédé selon la revendication 4, dans lequel on retarde la gélification en utilisant un agent gélifiant à prise lente ou en appliquant des conditions de température et de cisaillement qui empêchent le durcissement de la phase aqueuse gélifiable.

6. Procédé selon la revendication 4, dans lequel on épaissit/gélifie la phase aqueuse avec de la gélatine, le i-carragheenane, l'alginate de calcium, une protéine de lait ou des mélanges de ceux-ci.

7. Procédé selon la revendication 4, dans lequel la phase aqueuse du produit à tartiner contient de 1 à 15% en poids de protéines de lait, de préférence de caséinate de sodium et de 1 à 5% en poids de gélatine par rapport à la phase aqueuse.

8. Procédé selon la revendication 4, dans lequel on retarde le durcissement de la phase aqueuse du produit jusqu'à ce qu'au moins 5% et, de préférence, de 20 à 80% de la graisse cristallisable sont cristallisés.

9. Procédé selon la revendication 1, dans lequel on effectue la précristallisation de l'émulsion dans une unité Votator A fonctionnant à 500-1500 t/min et on mélange l'émulsion et on achève la cristallisation dans une unité Votator C ou en une série de 2 unités Votator C.

10. Procédé selon la revendication 9, dans lequel on effectue d'abord le mélange dans une première unité Votator C fonctionnant à 1500-3000 t/min, puis on poursuit le travail dans un second Votator C fonctionnant à 500-1500 t/min.

11. Procédé selon la revendication 1, dans lequel le rapport de la crème d'émulsion H/E à l'émulsion E/H est compris entre 1:5 et 1:1, de préférence entre 1:5 et 2,5:5.

12. Procédé selon la revendication 1, dans lequel la graisse riche en solides comprend des graisses à cristallisation rapide et à fusion précise choisies parmi les graisse d'acide laurique ou leurs fractions, le suif ou ses fractions , les graisses lauriques non hydrogénées, la graisse de beurre ou ses fractions et des mélanges desdites graisses, lesdites graisses à cristallisation rapide et à fusion précise étant de préférence incorporées dans la crème.

13. Procédé selon la revendication 1, dans lequel la graisse à cristallisation rapide constitue au moins 10% en poids et, de préférence, 20 à 80% du poids total de la graisse.

14. Procédé selon la revendication 1, dans lequel on utilise une phase grasse qui contient une graisse riche en solides, présentant le profil suivant des solides de graisse exprimés en pourcentages déterminés par RMN aux températures indiquées:
$N_5$ = 40-90 $N_{30}$ = 0,1 - 15
$N_{10}$ = 25-85 $N_{35}$ = 0-5
$N_{20}$ = 15-35

15. Procédé selon la revendication 1, dans lequel la phase grasse comprend de 10 à 80% en poids d'une graisse riche en solides et de 90 à 20% en poids d'autres huiles et graisses ayant une composition de triglycérides telle que le mélange gras total présente le profil suivant des solides de graisse :
$N_{10}$ = 20-70 $N_{30}$ = 0,1-5
$N_{20}$ = 10-40 $N_{35}$ = 0-5

16. Procédé selon la revendication 1, dans lequel la phase grasse comprend une graisse (i) caractérisée par la composition suivante des triglycérides :
triglycérides SSS : 1 à 9% en poids
triglycérides SOS : 30-75% en poids

triglycérides SSO : 3-12% en poids,
le complément de la graisse (i) jusqu'à 100% en poids consistant en triglycérides SOO et SLS.

**17.** Procédé selon la revendication 16, dans lequel la graisse (i) est une fraction médiane d'huile de palme, caractérisée par la composition suivante de triglycérides:
SSS = 1-5 % en poids
SOS = 50-75% en poids
SSO = 3 - 9% en poids
le complément des triglycérides (i) jusqu'à 100% en poids consistant en triglycérides SOO et SLS.

**18.** Procédé selon la revendication 16, dans lequel la graissee (i) est une fraction médiane d'huile de palme caractérisée par la composition suivante de triglycérides:
SSS = 1-9% en poids
SOS = 30-50% en poids
SSO = 5 - 12% en poids,
le complément des triglycérides (i) jusqu'à 100% en poids consistant en triglycérides SOO et SLS.

## Ansprüche

**1.** Verfahren zur Herstellung einer butterähnlichen W/O-Aufstrichemulsion, die weniger als 70 Gew.-% Fett enthält, ausgehend von einer verdickbaren oder zur Gelbildung befähigten wäßrigen Phase und einer Fettphase, dadurch gekennzeichnet, daß

a) ein Öl-in-Wasser-Emulsionsrahm aus einer wäßrigen Phase und einem Fett mit einem hohen Feststoffgehalt produziert wird, das mindestens 25 % kristallisiertes Fett bei einer Temperatur im Bereich von 5 bis 10°C enthält, und die Öl-in-Wasser-Emulsion auf eine Temperatur gekühlt wird, bei der mindestens ein Teil des Fettes mit dem hohen Feststoffgehalt kristallisiert wird,

b) getrennt von Schritt a) eine Wasser-in-Öl-Emulsion aus einer wäßrigen Phase und dem Fettrest der Fettphase hergestellt wird und die Wasser-in-Öl-Emulsion auf eine Temperatur gekühlt wird, bei der mindestens ein Teil des Fettrestes kristallisiert wird, und

c) die durch Schritt a) und Schritt b) erhaltenen wenigstens partiell kristallisierten Emulsionen vereinigt, gemischt, weiter abgekühlt und bearbeitet werden, um eine weitere Kristallisation der Fettphase zu erreichen und um eine Wasser-in-Öl-Aufstrichemulsion zu erhalten, die Fettkügelchen einer durchschnittlichen Größe von nicht mehr als 20 Mikrometern und vorzugsweise von 3 bis 6 Mikrometern enthält.

**2.** Verfahren nach Anspruch 1, worin ein Fett mit einem hohen Feststoffgehalt in dem Rahm konzentriert wird.

**3.** Verfahren nach Anspruch 1, worin die wäßrige Phase von mindestens einer der Ausgangsemulsionen ein Verdickungs- oder Geliermittel enthält.

**4.** Verfahren nach Anspruch 3, worin das Absetzen der wäßrigen Phase bis zu einem Stadium verzögert wird, wo mindestens ein Teil des Fettes kristallisierte.

**5.** Verfahren nach Anspruch 4, worin die Gelierung verzögert wird durch Einsatz eines langsam absetzenden Gelierungsmittels oder durch Anwendung einer Temperatur und von Scherbedingungen, die das Absetzen der zur Gelbildung befähigten wäßrigen Phase verhindern.

**6.** Verfahren nach Anspruch 4, worin die wäßrige Phase mit Gelatine, i-Carrageenan, Calciumalginat, Milchprotein oder Gemischen davon verdickt/geliert wird.

**7.** Verfahren nach Anspruch 4, worin die wäßrige Phase des Aufstrichs 1 bis 15 Gew.-% Milchprotein, vorzugsweise Natriumcaseinat, und 1 bis 5 Gew.-% Gelatine, bezogen auf die wäßrige Phase, enthält.

**8.** Verfahren nach Anspruch 4, worin das Absetzen der wäßrigen Phase verzögert wird, bis mindestens 5% und vorzugsweise 20 bis 80% des kristallisierbaren Fettes kristallisierte.

**9.** Verfahren nach Anspruch 1, worin eine Vorkristallisierung der Emulsion in einer Votator$^R$-A-Einheit ausgeführt wird, die mit 500 bis 1500 U/min arbeitet und die Emulsion mischt, und die vollständige Kristallisierung in einer Votator$^R$-C-Einheit oder in einer Folge von zwei Votator$^R$-C-Einheiten ausgeführt wird.

**10.** Verfahren nach Anspruch 9, worin das Mischen zuerst in einer ersten Votator$^R$-C-Einheit durchgeführt wird, die mit 1500 bis 3000 U/min arbeitet, wonach das weitere Bearbeiten in einer zweiten Votator$^R$-C-Einheit fortgesetzt wird, die mit 500 bis 1500 U/min arbeitet.

**11.** Verfahren nach Anspruch 1, worin das Verhältnis des O/W-Emulsionsrahms zu der W/O-Emulsion sich von 1:5 bis 1:1 erstreckt, vorzugsweise von1:5 bis 2,5:5.

**12.** Verfahren nach Anspruch 1, worin das Fett mit einem hohen Feststoffgehalt schnell kristallisierende, scharf schmelzende Fette enthält, ausgewählt aus hydrierten Laurinfetten oder Fraktionen davon, Talg oder Fraktionen davon, nichthydrierten Laurinfetten, Butterfett oder Fraktionen davon und Mischungen der Fette, wobei die schnell kristallisierenden, scharf schmelzenden Fette vorzugsweise in den Rahm aufgenommen werden.

**13.** Verfahren nach Anspruch 1, worin das schnell kristallisierende Fett mindestens 10 Gew.-% und vorzugsweise 20 bis 80 Gew.-%, bezogen auf das Gesamtfett, ausmacht.

**14.** Verfahren nach Anspruch 1, worin eine Fettphase verwendet wird, die ein Fett mit einem hohen Feststoffgehalt enthält, wobei das folgende Fettfeststoffprofil dargestellt wird, ausgedrückt in Prozenten und bestimmt bei den angegebenen Temperaturen durch kernmagnetische Resonanz (NMR):

$N_5$ = 40-90 $N_{30}$ = 0,1-15
$N_{10}$ = 25-85 $N_{35}$ = 0-5
$N_{20}$ = 15-35

**15.** Verfahren nach Anspruch 1, worin die Fettphase 10-80 Gew.-% eines Fetts mit einem hohen Feststoffgehalt und 90 bis 20 Gew.-% anderer Öle und Fette einer Triglyceridzusammensetzung umfaßt, so daß die Gesamtfettmischung das folgende Fettfeststoffprofil besitzt:

$N_{10}$ = 20-70 $N_{30}$ = 0,1-5
$N_{20}$ = 10-40 $N_{35}$ = 0-5

**16.** Verfahren nach Anspruch 1, worin die Fettphase ein Fett (i) umfaßt, gekennzeichnet durch die folgende Triglyceridzusammensetzung:

SSS-Triglyceride: 1-9 Gew.-%,
SOS-Triglyceride: 30-75 Gew.-%,
SSO-Triglyceride: 3-12 Gew.-%,

und wobei der Rest des Fettes (i) bis zu 100 Gew.-% aus SOO- und SLS-Triglyceriden besteht.

**17.** Verfahren nach Anspruch 16, worin das Fett (i) eine Palmölmittelfraktion ist, gekennzeichnet durch die folgende Triglyceridzusammensetzung:

SSS = 1-5 Gew.-%,
SOS = 50-75 Gew.-%,
SSO = 3-9 Gew.-%,

wobei der Rest der Triglyceride des Fetts (i) bis zu 100 Gew.-% aus SOO- und SLS-Triglyceriden besteht.

**18.** Verfahren nach Anspruch 16, worin das Fett (i) eine Palmölmittelfraktion ist, gekennzeichnet durch die folgende Triglyceridzusammensetzung:

SSS = 1-9 Gew.-%,
SOS = 30-50 Gew.-%,
SSO = 5-12 Gew.-%,
wobei der Rest der Triglyceride des Fetts (i) bis zu 100 Gew.-% aus SOO- und SLS-Triglyceriden besteht.